# NEUE EUROPÄISCHE PATENTSCHRIFT

(11) **EP 2 107 018 B2**
(45) Veröffentlichungstag und Bekanntmachung des Hinweises auf die Entscheidung über den Einspruch: **27.01.2016**
(45) Hinweis auf die Patenterteilung: 22.06.2011
(21) Anmeldenummer: 09155063.2
(22) Anmeldetag: 13.03.2009
(51) Int. Cl.: B65G 43/08, B65G 47/08, B65G 47/31

(54) **Vorrichtung zum Zusammenstellen und Ausrichten von Gebindegruppen**
Device for compiling and aligning container groups
Dispositif d'assemblage et d'alignement de groupes de gerbes

(30) Priorität: 04.04.2008 DE 102008002818; 02.12.2008 DE 102008055471
(43) Veröffentlichungstag der Anmeldung: 07.10.2009
(73) Patentinhaber: Krones AG, 93073 Neutraubling (DE)
(72) Erfinder: Meisinger, Alfred, 83059, Kolbermoor (DE)
(74) Vertreter: Grünecker Patent- und Rechtsanwälte PartG mbB

(56) Entgegenhaltungen:
- DE-A1- 2 346 407
- DE-A1- 3 339 793
- US-A1- 2005 246 056
- US-B1- 6 520 314

## Beschreibung

Die Erfindung betrifft eine Vorrichtung zum Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagen-bildungsband ist zum Antrieb mit jeweils einem eigenen Motor versehen.

Bekannt sind Gruppiertische zum Zusammenführen von Gebinden wie z. B. Kartons, Schrumpfpacks, Trays und Kunststoffkisten, die als Rollenbahnen ausgeführt sind. Das Zusammenführen der Gebinde kann in der Weise erfolgen, dass diese in eine zweidimensionale Formation (Blockbildung, z. B. Palettenschicht) gebracht werden. Dies geschieht dadurch, indem die Rollenbahn aus einer oder mehreren Gassen linear versorgt wird. Die Gebinde werden sodann je nach Bedarf vor oder auf dem Rollenförderer gedreht und auf dem Rollenförderer mechanisch durch Stoppstellen in der erforderlichen Position angeordnet. Die so angeordneten Gebinde werden dann rechtwinklig zur Transportrichtung vom Rollenförderer abgeschoben. Zulauf, Anordnung und Abschieben der Gebinde werden als ein Zyklus betrachtet. Zur Zusammenstellung einer Schicht werden ein oder mehrere Zyklen benötigt. Ein Nachteil dieser bekannten Ausführung ist, dass durch unsanftes Aufprallen der Gebinde auf die Stoppstellen keine produktschonende Verarbeitung der Gebinde gewährleistet ist.

Das europäische Patent EP 1 465 101 B1 offenbart eine Vorrichtung zur Reihenbildung von Packgütern für Gebindepalletierer. Der Gebindepalletierer besitzt mindestens eine Lagenstation und mindestens eine Palletierstation. Die Reihenbildungsvorrichtung weist mindestens eine Positionierstation auf, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Vor der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau der Vorrichtung gestaltet sich für die Erstellung einer Reihe für die Lage einer Palette kompliziert. Es ist hierfür eine Vielzahl von Bändern notwendig, die eine Abstandsbildung und/oder Drehung der Packgüter bewirken.

Die deutsche Offenlegungsschrift DE 2 346 407 offenbart eine Vorrichtung zur Regulierung der Zufuhr von Gegenständen zu einer Verpackungsmaschine. DE 2 346 407 offenbart ein Verfahren und eine Vorrichtung zum Zusammenstellen und Ausrichten von Gebinden gemäß den Oberbegriffen der Ansprüche 1 und 9. Dabei wird insbesondere auf die Regulierung der Phasenbeziehung zwischen einem Speicherband und einem Band zur Abstandsbildung in der automatischen Verpackungsmaschine Wert gelegt. Das Band zur Abstandsbildung, welches dem Speicherband nachgeschaltet ist, bewegt sich mit einer Geschwindigkeit V2, die größer ist, als die Geschwindigkeit V1 des Speicherbandes. Die Geschwindigkeiten sind so gewählt, dass die Gegenstände, die von dem Speicherband in dichter Aufeinanderfolge angeliefert werden, auf dem Band zur Abstandsbildung einen festen gegenseitigen Abstand einnehmen, der in Beziehung steht mit dem gewünschten Arbeitstakt der Verpackungsmaschine. Vom Band zur Abstandsbildung gelangen die zu verpackenden Gegenstände zu einem Transportband, das eine Vielzahl von Mitnehmerelementen aufweist, die in Form von Leisten ausgebildet sind.

Die US-Patentanmeldung US 2005/0246056 offenbart eine Vorrichtung, mit der einzelne Pakete in einer vorbestimmten Konfiguration angeordnet werden können.

Die deutsche Offenlegungsschrift DE 33 39 793 A1 offenbart eine Zuführvorrichtung, mit der eine Aufeinanderfolge von Gegenständen aus einem Zug in End- zu Endlage in eine Zuführvorrichtung auf einem sich schneller bewegenden Eingabeförderer einer Verpackungsmaschine im Takt mit der Bewegung der Mitnehmer einer Beschickungseinrichtung der Verpackungsmaschine zugeführt werden.

Das US-Patent 6,520,314 B1 offenbart eine Vorrichtung, mit der gebackenes Gut, wie z. B. Brotlaibe, entsprechend positioniert werden, damit sie für eine Verpackung geeignet sind. Die Brotlaibe laufen dabei über einen Zuführförderer auf einem Transportband ein, das die Brotlaibe dreht und/oder entsprechend verschiebt. Anschließend werden die so gedrehten und verschobenen Brotlaibe auf ein Tablett übergeführt, auf dem sie zu einer Lage zusammengeführt werden.

Das US-Patent 7,191,895 B2 offenbart ein System aus Förderbändern, mit dem Artikel einer Sortiereinheit zugeführt werden. Es sind ebenfalls Sensoren vorgesehen, die die Position und/oder Lage der auf der Oberfläche des Transportbandes transportierten Artikel bestimmen. Die Sensoren sind mit einer Steuereinheit verbunden, die das Einlaufen der Artikel in die Sortiereinheit prüft oder den Abstand zwischen den Artikeln steuert. Die Artikel werden jedoch nicht für die Lage einer Palette zusammengestellt.

Das US-Patent US 6,812,426 offenbart eine Vorrichtung mit der es möglich ist, dass Güter unter einem bestimmten Abstand auf ein weiteres Förderband ausgegeben werden. Eine Palettierung ist nicht vorgesehen.

Die britische Patentanmeldung GB 2 253 826 A offenbart eine Vorrichtung, mit der Artikel zu Gruppen zusammengestellt und anschließend die Artikel der Gruppen verpackt werden. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die Übersetzung des europäischen Patents DE 690 04 997 T2 offenbart ein Gerät zum Gruppenbilden und Synchronisieren von Gegenständen, die einer Verpackungsmaschine zugeführt werden. Hierzu ist ein Stromausgleichsförderband vorgesehen, das die eintreffenden Gegenstände befördert und einem Zubringerförderband zuführt, das mit im gleichen Abstand angeordneten Leisten versehen ist, welche Gruppen von Gegenständen trennen. Ferner ist ein erster Tachometer vorgesehen, der ein der Geschwindigkeit des Zubringerbandes proportionales Signal liefern kann. Mit zumindest einem Korrekturband, das von einem drehzahlveränderlichen Motor zwischen dem Stromausgleichsband und dem Zubringerband angetrieben wird, wird ein bestimmter Abstand eingestellt. Dem Korrekturband ist ein Gegenstandspositionsdetektor zugeordnet, der ein Signal in dem Augenblick abgeben kann, wenn ein Artikel jeweils auf das Korrekturband gelangt, und mit Schaltungseinrichtungen, die von dem ersten Tachometer und dem Gegenstandspositionsdetektor angetrieben werden, um den drehzahlveränderlichen Motor zu steuern. Das Gerät umfasst außerdem einen Leistendetektor, der ein Signal abgibt, wann immer eine Leiste an diesem vorbeiläuft, dass die Schaltungseinrichtung außerdem für jedes Korrekturband einen angeschlossenen Mikroprozessor umfasst, um die Signale von dem Leistendetektor, von dem Tachometer und von dem Gegenstandspositionsdetektor für das zugeordnete Korrekturband zu erhalten und um ein Geschwindigkeitssteuersignal an den drehzahlveränderlichen Motor zu liefern. Der Mikroprozessor ist darauf programmiert, die Geschwindigkeit des zugeordneten Korrekturbandes hinsichtlich eines Grundwertes zu steuern, der proportional zur Geschwindigkeit des Zubringerbandes ist. Daraufhin wird dieser Grundwert sofort durch eine additive Korrekturkonstante geändert, die proportional dem Produkt dieses Grundwertes und der Zeitdifferenz der von dem Leistendetektor und dem Gegenstandspositionsdetektor ausgegebenen Signale ist.

Die deutsche Offenlegungsschrift DE 10 2005 023 859 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US-Patentanmeldung US 2005/0246056 offenbart ein System zum Anordnen von Gebinden in einer Lage, die letztendlich auf einer Palette abgelegt bzw. gestapelt werden. Dabei sind drei Förderbänder linear angeordnet. Über ein erstes Förderband werden die Gebinde der Vorrichtung zur Verfügung gestellt. Die Gebinde sind auf dem ersten Förderband linear angeordnet Mit einem zweiten Förderband werden die Gebinde vereinzelt. Anschließend gelangen die Gebinde zu einem dritten Förderband, bei dem die Anordnung der Gebinde durchgeführt wird. Alle drei Förderbänder laufen mit unterschiedlichen aber konstanten Geschwindigkeiten. Nachdem eine Lage fertig zusammengestellt ist, wird die Lage auf die Palette übergeführt.

Die Patentschrift EP 1 046 598 beschreibt eine Vorrichtung zur Handhabung von Behälterpaketen, typischerweise Flaschen oder Blechdosen, um diese gemäß einer vorbestimmten Konfiguration anzuordnen, um deren Transport zu einer Palette zu ermöglichen.

Das europäische Patent EP 1 578 680 B1 offenbart eine Vorrichtung zum Anordnen und Ausrichten von Paketen. Zunächst erfolgt ein Erfassen eines voreilenden Paketes. Es erfolgt das Messen der Drehzahl eines Antriebsmotors eines ersten Bandes, auf dem sich das voreilende Paket befindet. Es schließt sich ein Heraufsetzen eines Zählers in Abhängigkeit von der Drehzahl des Motors des ersten Bandes an. Das Herabsetzen der Vorschubgeschwindigkeit wird an Hand des vom Zähler angenommenen Wertes durchgeführt. Schließlich erfolgt ein Erhöhen der Vorschubgeschwindigkeit des zweiten Förderbandes in Abhängigkeit des von dem Zähler eingenommenen Wertes.

Bei Verpackungs- und Palletieranlagen müssen bekanntlich Pakete, welche verarbeitete Produkte enthalten, auf Linien gehandhabt bzw. ausgerichtet werden, die dem Verfahren bzw. der Bearbeitung dienen und üblicherweise stromaufwärts der genannten Handhabungsstation angeordnet sind. Dies ist insbesondere bei Anlagen zur Behandlung von Behältern für Getränke, zum Beispiel Blechdosen und Flaschen aus Glas oder Kunststoff, die Wasser, Bier oder Wein enthalten, nötig. Insbesondere kann es sich bei den fraglichen Paketen um Kästen, Kartons, Gebinde oder Cluster handeln.

Gebinde werden gemäß dem Stand der Technik von einem Zuteilband auf ein Transportband vereinzelt übergeben. Das heißt, auf dem Zuteilband wird jeweils ein Gebinde an das Transportband übergeben. Dies geschieht dadurch, dass jedes einzelne Gebinde durch einen Geschwindigkeitsunterschied zwischen Zuteilband und Transportband einzeln auf das Transportband übergeben wird. Gesteuert wird dies über eine Lichtschrankensensorik.

Für die Erstellung einer transportsicheren Palette ist es erforderlich, dass mehrere Gebinde und/oder Gebindegruppen zu einem Takt zusammengestellt werden. Um hier dann für einen Takt mehrere Gebinde gleichzeitig von dem Transportband an das Lagenbildungsband zu übergeben, werden diese zunächst schrittweise von dem Zuteilband an das Transportband übergeben, dort gesammelt und dann an das Lagenbildungsband übergeben.

Ebenso wurde auch schon beobachtet, dass die Gebinde vereinzelt von dem Transportband durch schrittweises Fahren des Lagenbildungsbandes übergeben werden. Das heißt, um ein Gebinde von dem Transportband auf das Lagenbildungsband zu übergeben, wird das Lagenbildungsband synchron mit dem Transportband genau um eine Gebindelänge in Förderrichtung verfahren.

Auf dem Transportband können diese Takte je nach Lagenbildung auch gedreht werden und dann an das Lagenbildungsband übergeben werden.

Der Stand der Technik hat mehrere Nachteile. Beim Lückenziehen oder Übergeben der Gebinde zwischen Zuteilband, Transportband und auch Lagenbilduhgsband werden durch die Geschwindigkeitsunterschiede und hohen Beschleunigungs- und Verzögerungsrampen die Gebinde nicht exakt übergeben. Die Gebinde drehen sich hierbei oftmals von ihrer vorgegebenen Position ab. Eine große Rolle spielt hierbei auch der Reibwiderstand zwischen Förderband und Gebindeunterseite. Es kann keine exakte Lücke zwischen den Takten gebildet werden. Zusätzlich entsteht auch ein Leistungsverlust, der sich durch den zu fahrenden Weg der einzelnen Lücken beim Eintakten von Zuteilband auf Transportband ergibt. Somit erhöht sich letztendlich die Zeit, die für die Erstellung einer Palette benötigt wird.

Aufgabe der Erfindung ist, eine Vorrichtung zu schaffen, mit der eine sichere, schnelle und qualitativ hochwertige Bereitstellung von Takten aus Gebinden und/oder Gebindegruppen möglich ist, damit auf eine effektive Weise die Reihen für die Lagen einer Palette erstellt werden können.

Die obige Aufgabe wird durch eine Vorrichtung gelöst, die die Merkmale des Anspruchs 1 umfasst.

Es hat sich gezeigt, dass bei einem Verfahren zum Zusammenstellen zunächst auf einem Zuteilband einzelne Gebinde und/oder Gebindegruppen Stoß an Stoß angeliefert werden. Dem Zuteilband ist ein Transportband nachgeordnet, das mit einer ersten Transportgeschwindigkeit betrieben wird. Aus den Gebinden und/oder Gebindegruppen werden Takte gebildet, wobei vordefinierte Lücken zwischen den Takten dadurch erzeugt werden, dass die Geschwindigkeit des Zuteilbandes entsprechend gesteuert wird. Die Takte werden mit der zwischen ihnen vordefinierten Lücke auf ein Reihen- oder Lagenbildungsband übergeführt, wobei das Reihen- oder Lagenbildungsband mit einer zweiten Geschwindigkeit angetrieben wird.

Gemäß einer ersten Ausführungsform ist dem Reihen- oder Lagenbildungsband ein Roboter zugeordnet, mit dem die vom Transportband einlaufenden Takte für die zur Palletierung erforderliche Lagenbildung in Transportrichtung und/oder quer zur Transportrichtung verschoben und/oder gedreht werden. Auf dem Reihen- oder Lagenbildungsband wird eine aus mehreren Reihen bestehende Lage gebildet.

Gemäß einer weiteren Ausführungsform ist dem Transportband eine Orientiereinrichtung zugeordnet, die die auf Lücke einlaufenden Takte in eine vorbestimmte Orientierung bringt. Die Takte werden mit dieser eingestellten Orientierung auf das Lagenbildungsband übergeführt.

Ferner ist es gemäß,einer weiteren Ausführungsform der Erfindung möglich, dass auf dem Zuteilband die Gebinde und/oder Gebindegruppen in der für das Transportband und dem Reihen- oder Lagenbildungsband erforderlichen Orientierung angeliefert werden.

Für die Durchführung der verschiedenen Ausführungsformen des nicht erfindungsgemäßen Verfahrens ist eine programmierbare Steuerung vorgesehen, über die ein erster Motor, der dem Zuteilband zugeordnet ist, ein zweiter Motor, der dem Transportband zugeordnet ist und/oder ein dritter Motor, der dem Reihen- oder Lagenbildungsband zugeordnet ist derart gesteuert werden, dass die vordefinierten Takte und deren Abstände auf dem Transportband eingehalten werden. Zumindest das Transportband und das Lagenbildungsband werden weitestgehend mit einer konstanten Geschwindigkeit angetrieben.

Über eine dem Zuteilband zugeordnete Lichtschrankenanordnung wird überprüft, ob die Gebinde und/oder Gebindegruppen Stoß an Stoß auf dem Zuteilband transportiert werden. Bei Feststellung einer Lücke zwischen den Gebinden und/oder Gebindegruppen auf dem Zuteilband wird durch die Lichtschrankenanordnung das Zuteilband derart gesteuert, dass die Lücke geschlossen wird.

Mindestens eine Lichtschrankenanordnung ist im Bereich des Übergangs vom Zuteilband auf das Transportband angeordnet, mit der die vordefinierten Lücken zwischen den Takten bestimmt werden. Bei einer Abweichung von der vordefinierten Lücke werden das Zuteilband und/oder das Transportband entsprechend gesteuert.

Die erfindungsgemäße Vorrichtung zum Zusammenstellen und Ausrichten von Gebinden und/oder Gebindegruppen umfasst ein Zuteilband, ein Transportband und ein Reihen- oder Lagenbildungsband. Das Zuteilband, das Transportband und das Reihen- oder Lagenbildungsband sind mit jeweils einem eigenen Motor versehen. Es ist eine Steuerung vorgesehen, die zumindest die Geschwindigkeit des Zuteilbandes steuert, um bei den auf dem Zuteilband Stoß an Stoß transportierten Gebinden und/oder Gebindegruppen auf dem Transportband mehrere Takte aus Gebinden und/oder Gebindegruppen zu bilden, die voneinander über eine vordefinierte Lücke (D) beabstandet sind.

Gemäß einer ersten Ausführungsform ist zur Bildung der Lagen für eine Palette dem Reihen- oder Lagenbildungsband ein Roboter zugeordriet. Die vom Transportband einlaufenden Takte werden zur Lagenbildung in Transportrichtung und/oder quer zur Transportrichtung durch den Roboter verschoben und/oder gedreht. Das Reihen- oder Lagenbildungsband besitzt dabei mindestens eine derartige Breite, um die komplette Lage aufzunehmen, bevor diese auf eine Palette übergesetzt wird. In einer anderen Ausführungsform der Vorrichtung ist dem Transportband eine Orientiereinrichtung zugeordnet. Von dem Transportband wird dann die entsprechend orientierte Reihe aus Takten auf das Reihen- oder Lagenbildungsband übergeführt.

Ferner ist es möglich, dass das Zuteilband als ein Stauförderer ausgebildet ist. Auf dem Zuteilband liegen die Gebinde und/oder Gebindegruppen in der für das Transportband und dem Reihen- oder Lagenbildungsband erforderlichen Orientierung vor.

Die Erfindung beruht auf einer programmierten Steuerung, die es ermöglicht, mindestens einen Takt gemeinsam an das Transportband und an ein Reihen- oder Lagenbildungsband zu übergeben, wobei der im weiteren Verlauf nächste Takt mit einer definierten Lücke an das Lagenbildungsband übergeben wird. Wie oben dargelegt kann ein Takt aus mehreren aneinander gereihten Gebinden bestehen. Üblicherweise besteht ein Takt aus mehr als einem Gebinde. Jedoch kann ein Takt auch aus einem Gebinde bestehen. Die Takte werden immer erst beim Übergang vom Zuteilband auf das Transportband gebildet. Der Steuerung ist bekannt wie die einzelnen Takte zusammengestellt werden müssen. Das Zuteilband wird dann entsprechend gesteuert, dass die Gebinde und/oder Gebindegruppen von dem Zuteilband auf das Transportband derart übergeben werden, dass die Gebinde und/oder Gebindegruppen eines Takts lückenlos auf dem Transportband stehen und dass zwischen den einzelnen Takten die vordefinierte Lücke eingestellt ist.

Die zur Lagenbildung benötigte Lücke zwischen den einzelnen Takten wird durch die exakte Feststellung der Position der Gebinde auf dem Zuteilband mittels Lichtschrankensensorik ermittelt. Auf Grund dieser exakten Positionsermittlung ist es im Anschluss möglich, die benötigte Lücke zwischen zwei Takten mit Kurvenscheibensteuerung (elektronische Kurvensteuerung) exakt zu produzieren. Die Lücken können mit Hilfe dieser Steuerungstechnik völlig variabel zwischen den einzelnen Takten gestaltet werden. Das heißt, die Lücke könnte beispielsweise zwischen dem ersten Takt und dem zweiten Takt 200 mm betragen und zwischen dem zweiten Takt und dem dritten Takt 100 mm betragen. Dies ist vor dieser Erfindung so exakt noch nicht möglich gewesen.

In der Beschreibung zu dieser Erfindung soll der Begriff Takt für ein oder mehrere Gebinde oder Gebindegruppen verwendet werden. Bilden mehrere Gebinde oder Gebindegruppen einen Takt, dann liegen die Gebinde oder Gebindegruppen lückenlos aneinander und berühren sich untereinander.

Die Vorteile der Erfindung sind erheblich. Es kommt zu keinem Verdrehen der Gebinde oder Gebindegruppen durch taktweise Übergabe vom Zuteilband an das Transportband und weiter an das Lagenbildungsband. Mittels der elektronischen Kurvenscheibensteuerung des Zuteilbandes, welches ein Stauförderer ist, werden die Takte auf das im Wesentlichen mit konstanter Geschwindigkeit betriebene Transportband übergeben. Eine exakte Lückenbildung zwischen den einzelnen Takten ist somit möglich. Es kommt zu einer Zeitersparnis, da bei taktweiser Übergabe keine Lücken zwischen einzelnen Gebinden entstehen und es zu kleinem ungewollten Verdrehen der Takte kommt. Vorangegangene Lücken aus dem Gebindetransport werden kompensiert. Hinzu kommt, dass sich die einzelnen Gebinde oder Gebindegruppen durch das taktweise Übergeben in einem Takt gegeneinander stützen.

Im Folgenden sollen Ausführungsbeispiele die erfindungsgemäße Vorrichtung und deren Vorteile anhand der beigefügten Figuren näher erläutern.
**Figur 1** zeigt eine schematische Draufsicht auf die Vorrichtung zum Anordnen und Zusammenstellen von Takten aus Gebinden oder Gebindegruppen.
**Figur 2** zeigt eine schematische Seitenansicht der Vorrichtung, bei der die Gebinde oder Gebindegruppen zu Takten zusammengestellt werden.
**Figur 3** zeigt eine erste Ausführungsform der Vorrichtung zum Erzeugen von Takten für die Bildung von Reihen, um daraus Lagen für eine Palette zu bilden.
**Figur 4** zeigt eine zweite Ausführungsform der Vorrichtung zum Erzeugen von Takten für die Bildung von Reihen, um daraus Lagen für eine Palette zu bilden.
**Figur 5** zeigt eine dritte Ausführungsform der Vorrichtung zum Erzeugen von Takten für die Bildung von Reihen, um daraus Lagen für eine Palette zu bilden.
**Figur 6** zeigt ein Kurvenscheibendiagramm zur Geschwindigkeitssteuerung der Zuführbahn, um damit Lückenbildung zwischen zwei aufeinanderfolgenden Takten auf der Transportbahn zu erzielen.
**Figur 7** zeigt eine mögliche Ausführungsform, bei der auf dem Zuführband die Gebinde oder die Gebindegruppen in zwei Bahnen angeliefert werden.
**Figur 8** zeigt eine mögliche Ausführungsform, bei der auf dem Transportband zwei Bahnen aus Takten vorliegen.
**Figur 9** zeigt eine Möglichkeit, wie die auf dem in Figur 8 gezeigten Transportband vorhandenen Takte gedreht werden können, um auf dem Reihen- oder Lagenbildungsband einer Ausführungsform der Erfindung eine Lage für eine Palette zu formen.
**Figur 10** zeigt eine Draufsicht auf eine aus unterschiedlichen Takten zusammengestellte Lage.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

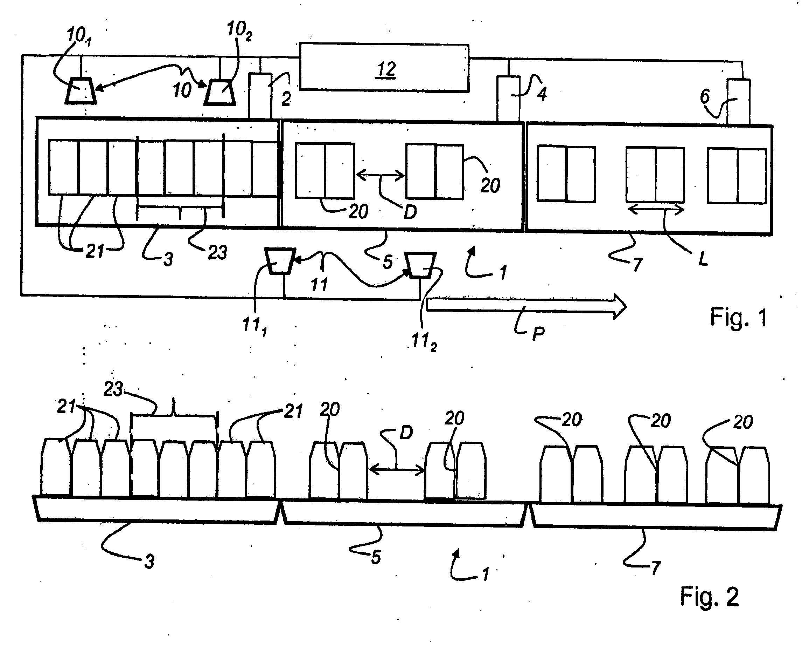

**Figur 1** zeigt eine schematische Draufsicht auf die Vorrichtung 1 zum Anordnen und Zusammenstellen von Takten 20 aus Gebinden 21 oder Gebindegruppen 23. Der Unterschied zwischen Gebinden 21 und Gebindegruppen 23 ist, dass die Gebindegruppen 23 bereits aus mehr als einem Gebinde 21 bestehen. Dies ist in Figur 1 in entsprechender Weise gekennzeichnet. Die Vorrichtung 1 umfasst ein Zuteilband 3, das mit einem Motor 2 angetrieben wird. Dem Zuteilband 3 ist ein Transportband 5 nachgeordnet. Dem Transportband 5 ist ein Reihen- oder Lagenbildungsband 7 nachgeordnet. Das Zuteilband 3 ist über einen ersten Motor 2 antreibbar. Das Transportband 5 ist über einen zweiten Motor 4 antreibbar. Das Reihen- oder Lagenbildungsband 7 ist über einen dritten Motor 6 antreibbar. Das Zuteilband 3, das Transportband 5 und das Reihen- oder Lagenbildungsband 7 werden in Richtung eines Pfeils P angetrieben. Von dem Zuteilband 3 werden die einzelnen Gebinde 21 oder Gebindegruppen 23 Stoß an Stoß angeliefert. Das Zuteilband 3 wird durch eine Steuerung 12 entsprechend taktweise angetrieben, damit auf dem Transportband 5 die Takte 20 mit einer vordefinierten Lücke D voneinander beabstandet sind. Die Takte 20 werden vom Transportband 5 auf das Reihen- oder Lagenbildungsband 7 übergeführt. Das Transportband bewegt sich im Wesentlichen mit konstanter Geschwindigkeit, um die Takte 20 auf das Reihen- oder Lagenbildungsband 7 überzuführen. Um dies zu erreichen, ist eine programmierbare Steuerung 12 vorgesehen, über die der erste, zweite und/oder dritte Motor 2, 4 und/oder 6 derart gesteuert werden, dass ein Takt 20 gemeinsam von dem Transportband 5 auf das Reihen- oder Lagenbildungsband 7 übergeben wird. Durch die programmierbare Steuerung 12 ist es möglich, dass die Stoß an Stoß durch das Zuteilband 3 angelieferten Gebinde 21 der Gebindegruppen 23 auf das Transportband 5 gemäß dem erforderlichen Takt 20 für die Reihenbildung übergeben werden.

Dem Zuteilband 3 ist eine erste Lichtschrankenanordnung 10 zugeordnet. Die Lichtschrankenanordnung 10 kann z.B. eine erste Lichtschranke 10₁ und eine zweite Lichtschranke 10₂ umfassen, die überprüfen, ob die Gebinde 21 und/oder die Gebindegruppen 23 für eine qualitativ hochwertige Palletierung auch Stoß an Stoß auf dem Zuteilband transportiert werden. Die Information von der Lichtschrankenanordnung 10 wird der Steuerung 12 übergeben, damit immer der Stoß-an-Stoß-Transport der Gebinde 21 und/oder Gebindegruppen 23 gewährleistet ist Ebenso ist im Bereich des Übergangs vom Zuteilband 3 auf das Transportband 5 eine weitere Lichtschrankenanordnung 11 vorgesehen. Diese weitere Lichtschrankenanordnung 11 kann z. B. eine erste Lichtschranke 11, und eine zweite Lichtschranke 11₂ umfassen. Von der weiteren Lichtschrankenanordnung 11 gelangt die Information über die Länge L der Takte 20 und der Lücke D zwischen den Takten 20 an die Steuerung 12. Über die Steuerung 12 wird die Geschwindigkeit des Zuteilbandes 3 derart gesteuert, dass die vom Programm her erforderlichen Takte 20 mit der vordefinierten Lücke vom Zuteilband 3 auf das Transportband 5 übergeben werden. Ebenso wird die weitere Lichtschrankenanordnung 11 zur Qualitätssicherung verwendet, um die Lücke D zwischen den Takten 20 zu verifizieren. Das Transportband 5 und das Lagenbildungsband 7 laufen mit konstanter Geschwindigkeit.

**Figur 2** zeigt eine schematische Seitenansicht der Vorrichtung 1, bei der die Gebinde 21 und/oder Gebindegruppen 23 (hier z.B. aus drei Gebinden 23) zu Takten 20 zusammengestellt werden. Die hier zusammengestellten Takte 20 bestehen aus zwei Gebinden 21. Je nach Programmierung der Steuerung 12 ist im Prinzip jede Art von Takten 20 zusammenstellbar. Letztendlich werden von dem Muster der Lagen, die für die Palettierung erforderlich sind, die einzelnen Takte 20 bestimmt.

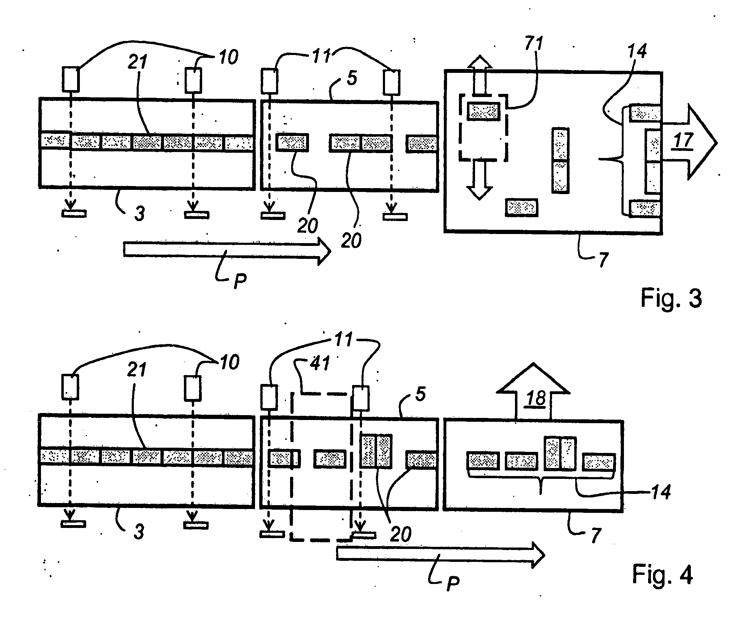

**Figur 3** zeigt eine erste Ausführungsform der Vorrichtung 1 zum Erzeugen von Takten 20 für die Bildung von Reihen, um daraus Lagen für eine Palette zu bilden. Die Vorrichtung 1 besteht aus dem Zuteilband 3, dem Transportband 5 und dem Reihen- oder Lagenbildungsband 7. Das Zuteilband 3 führt die Gebinde Stoß an Stoß zu. Das Transportband 5 läuft im Wesentlichen kontinuierlich und transportiert die Takte 20 mit der vordefinierten Lücke D. Das Reihen- oder Lagenbildungsband 7 bildet aus den einlaufenden Takten eine Reihe für eine Lage, die dann in Richtung des Pfeils 17 an eine Palettiermaschine (nicht dargestellt) übergeben werden. Bei der hier dargestellten Ausführungsform ist dem Reihen- oder Lagenbildungsband 7 ein Roboter 71 zugeordnet, der die vom Transportband 5 einlaufenden Takte 20 zur Lagenbildung in Transportrichtung und/oder quer zur Transportrichtung P verschiebt und/oder dreht. Das Reihen- oder Lagenbildungsband 7 ist breiter als das Zuteilband 3 und das Transportband 5. Das Reihenoder Lagenbildungsbänd 7 ist in eine sogenannte ROBOBOX 30 eingebunden, die die Takte gemäß einer Steuerung und Lagenbildungssoftware positioniert und/oder orientiert. Wie bereits bei der Beschreibung zu Figur 1 erwähnt, überwachen Lichtschrankenanordnungen 10, 11, ob auf dem Zuteilband 3 die Gebinde 21 oder Gebindegruppen 23 auch Stoß an Stoß transportiert werden. Ferner wird überprüft, ob an der Übergabe vom Zuteilband 3 auf das Transportband 5 die erforderlichen Taktlängen gebildet werden. Die Steuerung 12 regelt die Geschwindigkeit für das Zuteilband 3, damit die nach Lagenbildungssoftware erforderlichen Takte 20 gebildet werden.

**Figur 4** zeigt eine zweite Ausführungsform der Vorrichtung zum Erzeugen von Takten 20 für die Bildung von Reihen 14, um daraus letztendlich Lagen für eine Palette zusammenzustellen. Hierzu ist dem Transportband 5 eine Orientiereinrichtung 41 zugeordnet, die die einlaufenden Takte 20 in eine durch die Steuerung 12 vorbestimmte Orientierung bringt. Die so orientierten Takte 20 werden auf das Lagenbildungsband 7 übergeführt. Über das Zuteilband 3 werden die Gebinde 21 oder Gebindegruppen 23 Stoß an Stoß zugeführt. Auf dem Transportband 5, das im Wesentlichen kontinuierlich läuft, werden die Takte 20 mit einer bestimmten Lücke D transportiert. Eine Orientiereinrichtung 41 ist dem Transportband 5 zugeordnet, die die von der Steuerung 12 (Lagenbildungssoftware) ausgewählten Takte dreht (anders orientiert). Auf dem Reihen- oder Lagenbildungsband 7 wird aus den einlaufenden Takten 20 eine Reihe 14 für eine zur Palettierung vorgesehene Lage gebildet. Wie bereits oben erwähnt, ist eine erste Lichtschrankenanordnung 10 vorgesehen, die überwacht, ob Lücken zwischen den Gebinden 21 oder Gebindegruppen 23 auf dem Zuteilband 3 vorliegen, da auf dem Zuteilband die Gebinde 21 oder Gebindegruppen 23 Stoß an Stoß gefordert werden. Ebenso ist eine zweite Lichtschrankenanordnung 11 dem Transportband 5 zugeordnet, mit der überprüft wird, ob auf dem Transportband 5 die vom System erforderliche Lücke D zwischen den Takten 20 gebildet ist. Die Steuerung 12 regelt für das Zuteilband 3 die Geschwindigkeit, damit die nach Lagenbildungssoftware erforderlichen Takte 20 für das nachgeordnete Transportband gebildet werden. Wie bereits in der Beschreibung zu Figur 1 erwähnt, ist dem Zuteilband 3, dem Transportband 5 und dem Reihen- oder Lagenbildungsband 7 jeweils ein individuell steuerbarer Motor 2, 4, und 6 zugeordnet. Vom Reihen- oder Lagenbildungsband 7 aus erfolgt der Überschub der fertigen Reihe 14 in Peilrichtung 18 auf eine Lagenbildungseinheit (nicht dargestellt). Dies wird so oft wiederholt, bis auf der Lagenbildungseinheit eine Lage fertiggestellt ist und auf eine Palette übergeführt werden kann.

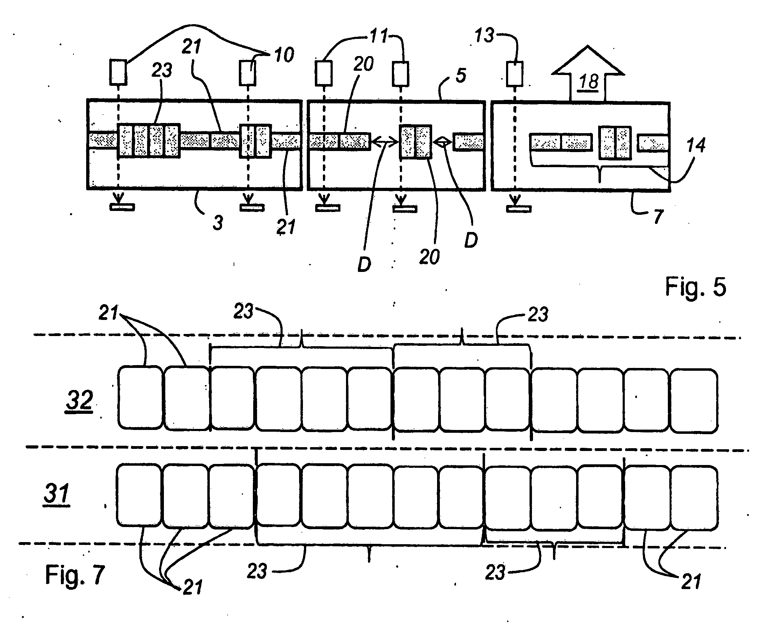

**Figur 5** zeigt eine dritte Ausführungsform der Vorrichtung 1 zum Erzeugen von Takten 20 für die Bildung von Reihen 14, um daraus Lagen für eine Palette zu bilden. Hier werden bereits auf dem Zuteilband 3 die Gebinde 21 und/oder Gebindegruppen 23 in der für das Transportband 5 und dem Reihen- oder Lagenbildungsband 7 erforderlichen Orientierung angeliefert. Das Zuteilband 3 ist ein Stauförderer, so dass die Gebinde 21 und/oder Gebindegruppen 23 Stoß an Stoß angeliefert werden. Dem Zuteilband 3 ist eine erste Lichtschrankenanordnung 10 zugeordnet, die überwacht, ob Lücken zwischen den Gebinden 21 oder Gebindegruppen 23 auf dem Zuteilband 3 vorliegen, da auf dem Zuteilband die Gebinde 21 oder Gebindegruppen 23 Stoß an Stoß gefördert werden. Ebenso ist eine zweite Lichtschrankenanordnung 11 dem Transportband 5 zugeordnet, mit der überprüft wird, ob auf dem Transportband 5 die vom System erforderliche Lücke D zwischen den Takten 20 gebildet ist. Das Transportband 5 läuft im Wesentlichen kontinuierlich, wobei die Takte 20 durch die Geschwindigkeitssteuerung des Zuteilbandes 3 gebildet werden. Die Taktbildung und die Lücke D werden mit einer weiteren Lichtschrankenanordnung 11 kontrolliert. Mit einem auf das Transportband 5 folgenden Reihen- oder Lagenbildungsband 7, werden die gedrehten Takte und/oder nicht gedrehten Takte zu einer Reihe zusammengefahren. Dies kann mit einem Anschlag erfolgen, der dem Reihen- oder Lagenbildungsband 7 zugeordnet ist. Dem Reihen- oder Lagenbildungsband 7 kann ebenfalls eine Lichtschrankenanordnung 13 zugeordnet sein, mit der die auf das Reihen- oder Lagenbildungsband 7 einlaufenden Takte 20 hinsichtlich deren Länge L überprüft werden. Vom Reihen- oder Lagenbildungsband 7 aus erfolgt der Überschub der fertigen Reihe 14 in Pfeilrichtung 18 auf eine Lagenbildungseinheit (nicht dargestellt). Dies wird so oft wiederholt, bis auf der Lagenbildungseinheit eine Lage fertiggestellt ist und auf eine Palette übergeführt werden kann.

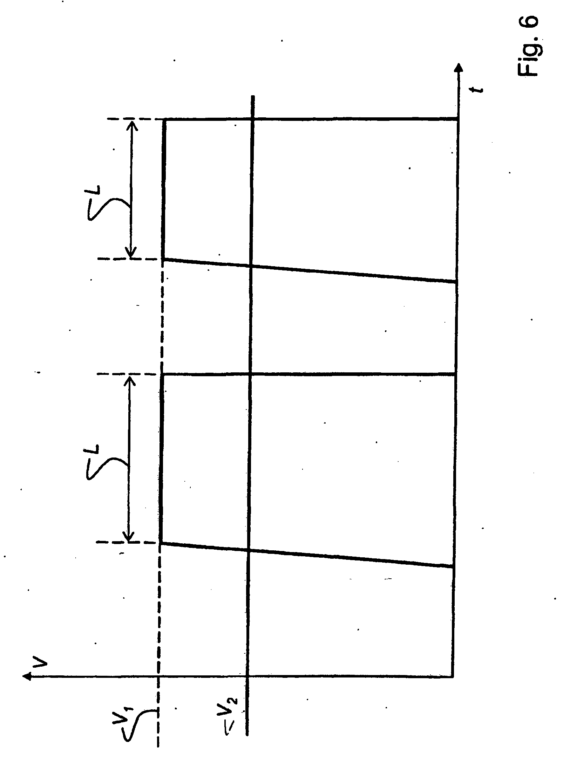

**Figur 6** zeigt ein Kurvenscheibendiagramm 25 zur Lückenbildung zwischen zwei aufeinanderfolgenden Takten 20 auf dem Transportband 5, das dem Zuteilband 3 nachgeordnet ist. V₁ bezeichnet in diesem Diagramm die Geschwindigkeit des Zuteilbandes 3. V₂ bezeichnet in diesem Diagramm die im Wesentlichen konstante Geschwindigkeit des Transportbandes 5. Das Zuteilband 3 wird taktweise betrieben, um aus den Stoß an Stoß angelieferten Gebinden 21 oder Gebindegruppen 22 die erforderlichen Takte 20 der gewünschten Länge L zu bilden. Die Geschwindigkeit des Zuteilbandes 3 wird zur Bildung der Takte 20 auf die Geschwindigkeit V₁ erhöht, die größer ist als die Geschwindigkeit V₂ des Transportbandes 5. Durch die geeignete Steuerung des Zuteilbandes 3 kann man die gewünschte Lücke D zwischen zwei Takten 20 einstellen.

**Figur 7** zeigt eine mögliche Ausführungsform, bei der die Gebinde 21 oder die Gebindegruppen 23 in zwei Bahnen 31 und 32 auf dem Zuführband 3 angeliefert werden. Die Gebinde 21 oder die Gebindegruppen 23 können dabei in den zwei Bahnen 31 und 32 verschieden eingeteilt sein. Die Gebinde 21 oder die Gebindegruppen 23 werden ebenfalls Stoß an Stoß angeliefert.

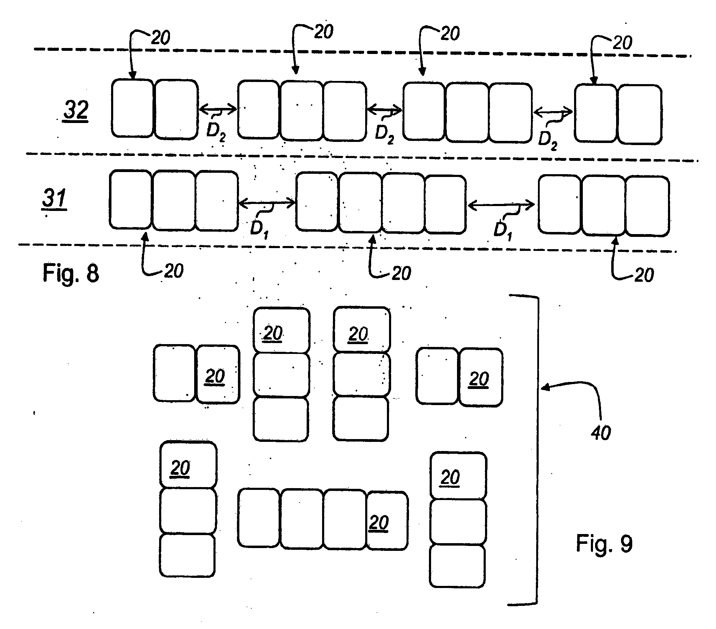

**Figur 8** zeigt eine mögliche Ausführungsform, bei der sich auf dem Transportband 5 zwei Bahnen aus Takten 20 befinden. Die Takte 20 sind in der ersten Bahn 51 jeweils durch die Lücke D₁ voneinander beabstandet. Ebenfalls sind die Takte 20 in der zweiten Bahn 52 jeweils durch die Lücke D₂ voneinander beabstandet. Falls mehr als zwei Bahnen von Takten verarbeitet werden, erhöht dies die Effizienz der Vorrichtung. Ebenso ist es vorstellbar, dass parallel zueinander zwei oder mehr Zuteilbänder 3, zwei oder mehr Transportbänder 5 und zwei oder mehr Reihen- oder Lagenbildungsbänder 7 angeordnet sind.

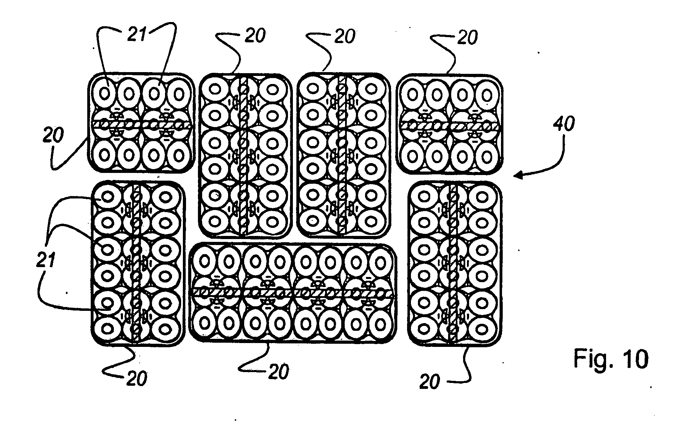

**Figur 9** zeigt eine Möglichkeit, wie die auf dem in Figur 8 gezeigten Transportband 5 vorhandenen Takte 20 gedreht werden können, um eine Lage 40 (siehe Figur 10) für eine Palette zu bilden. **Figur 10** zeigt eine Draufsicht auf eine aus unterschiedlichen Takten 20 zusammengestellte Lage 40. Die Takte 20 sind dabei unterschiedlich lang, um dadurch in einer Lage 40 einen Verbund zu bilden. Die einzelnen Takte 20 sind durch eine Linie gekennzeichnet, die die einzelnen Gebinde 21 eines Taktes 20 umrandet. Die Linie dient lediglich zur Verdeutlichung der einzelnen Takte 20. In der hier gezeigten Ausführung ist jeder Takt 20 den mehreren Gebinden 21 der Flüssigkeitsbehälter zusammengestellt worden. Die einzelnen Gebinde 21 sind Schrumpfverpackungen, was nicht als eine Beschränkung der Erfindung aufgefasst werden kann und darf. Die fertige Lage 40 kann somit mit einem automatischen Greifer (nicht dargestellt) auf einer Palette (nicht dargestellt) abgelegt werden. Die einzelnen Lagen 40, welche nacheinander auf der Palette abgelegt werden, werden in einer Verbundbauweise zusammengestellt, so dass sich aus der Verbundbauweise eine zusätzliche Stabilität der mehreren Lagen 40 auf der Palette ergibt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Es ist selbstverständlich, dass die gegenwärtige Erfindung mit allen möglichen Arten von Gebinden ausführbar ist.

## Patentansprüche

1. Vorrichtung (1) zum Zusammenstellen und Ausrichten von Gebinden (21) und/oder Gebindegruppen (23), wobei ein Zuteilband (3), ein Transportband (5) und ein Reihen- oder Lagenbildungsband (7) vorgesehen sind, **dadurch gekennzeichnet, dass** dem Zuteilband (3) ein erster Motor (2), dem Transportband (5) ein zweiter Motor (4) und dem Reihen- oder Lagenbildungsband (7) ein dritter Motor (6) zugeordnet ist, dass eine Steuerung (12) vorgesehen ist, die zumindest die Geschwindigkeit (V1) des Zuteilbandes (3) steuert, um bei den auf dem Zuteilband (3) Stoß an Stoß transportierten Gebinden (21) und/oder Gebindegruppen (23) auf dem mit im Wesentlichen konstanter Geschwindigkeit (V2) angetriebenen Transportband (5) mehrere Takte (20) entsprechend einer vordefinierten Länge (L) aus Gebinden (21) und/oder Gebindegruppen (23) zu bilden, die voneinander über eine vordefinierte Lücke (D) beabstandet sind.

2. Vorrichtung nach Anspruch 1, wobei dem Reihen- oder Lagenbildungsband (7) ein Roboter (71) zugeordnet ist, der die vom Transportband (5) einlaufenden Takte (20) zur Lagenbildung in Transportrichtung (P) und/oder quer zur Transportrichtung (P) verschiebt und/oder dreht und dass das das Reihen- oder Lagenbildungsband (7) derart ausgebildet ist, dass eine aus mehreren Reihen (14) bestehende Lage erzeugbar ist.

3. Vorrichtung nach Anspruch 1, wobei dem Transportband (5) eine Orientiereinrichtung (41) zugeordnet ist, die die einlaufenden Takte (20) in eine vorbestimmte Orientierung bringt und dass die so orientierten Takte (20) als Reihe (14) auf das Reihen- oder Lagenbildungsband (7) überführbar sind.

4. Vorrichtung nach Anspruch 1, wobei auf dem Zuteilband (3) die Gebinde und/oder Gebindegruppen in der für das Transportband (5) und dem Reihen- oder Lagenbildungsband (7) erforderlichen Orientierung vorliegen.

5. Vorrichtung nach einem der Ansprüche 1 bis 4, wobei die Steuerung eine programmierbare Steuerung (12) ist, über die der erste Motor (2), des Zuteilbandes (3), der zweite Motor (4) des Transportbandes (5) und/oder der dritte Motor (6), des Reihen- oder Lagenbildungsbandes (7), derart steuerbar sind, dass die mehreren Takte (20) entsprechend einer vordefinierten Länge (L) und der vordefinierten Lücke (D) zwischen den Takten (20) auf dem Transportband (5) vorliegen.

6. Vorrichtung nach einem der Ansprüche 1 bis 5, wobei mindestens eine Lichtschrankenanordnung (11) im Bereich des Übergangs vom Zuteilband (3) auf das Transportband (5) angeordnet ist, die die vordefinierten Lücken (D) zwischen den Takten (20) und die erforderlichen Längen (L) der Takte (20) bestimmt und dass bei einer Abweichung von der vordefinierten Lücke (D) die Steuerung (12) die Geschwindigkeit (V2) des Transportbandes (5) entsprechend steuert.

7. Vorrichtung nach einem der Ansprüche 1 bis 6, wobei auf dem Zuteilband (3) die Gebinde (21) und/oder Gebindegruppen (23) und auf dem Transportband (5) die mit einer Lücke (D) beabstandeten Takte (20) in zwei Reihen parallel zueinander angeordnet sind.

## Claims

1. Apparatus (1) for assembling and aligning packages (21) and/or package groups (23), where a distribution belt (3), a conveyor belt (5) and a row or layer forming belt (7) are provided, **characterized in that** the distribution belt (3) has assigned thereto a first motor (2), the conveyor belt (5) has assigned thereto a second motor (4), and the row or layer forming belt (7) has assigned thereto a third motor (6), that a control (12) is provided, which controls at least the speed (V1) of the distribution belt (3) to form a plurality of cycles (20) according to a predefined length (L) of packages (21) and/or package groups (23) on the conveyor belt (5) substantially driven at a constant speed in the case of the packages (21) and/or package groups (23) transported batch-by-batch on the distribution belt (3), said cycles (20) being spaced from each other with a predefined gap (D).

2. Apparatus according to claim 1, wherein a robot (71) is assigned to the row or layer forming belt (7), which moves and/or rotates the cycles (20) coming from the conveyor belt (5) for layer formation in the transportation direction (P) and/or across the transportation direction (P) and that the row or layer forming belt (7) is designed such that a layer consisting of a plurality of rows (14) can be produced.

3. Apparatus according to claim 1, wherein the conveyor belt (5) has assigned thereto an orientation device (41), which brings the incoming cycles (20) into a predetermined orientation and that the cycles (20) oriented in this manner can be transferred to the row or layer forming belt (7) as a row (14).

4. Apparatus according to claim 1, wherein the packages and/or package groups are available on the distribution belt (3) in the orientation required for the conveyor belt (5) and the row or layer forming belt (7).

5. Apparatus according to one of claims 1 to 4, wherein the control is a programmable control (12), using which the first motor (2) of the distribution belt (3), the second motor (4) of the conveyor belt (5) and/or the third motor (6) of the row or layer forming belt (7) can be controlled such that the plurality of cycles (20) are available on the conveyor belt (5) according to a predefined length (L) and the predefined gap (D) between the cycles (20).

6. Apparatus according to one of claims 1 to 5, wherein at least one light barrier arrangement (11) is arranged in the transition area between the distribution belt (3) and the conveyor belt (5), which determines the predefined gaps (D) between the cycles (20) and the required lengths (L) of the cycles (20), and that the control (12) accordingly controls the speed (V2) of the conveyor belt (5) in case of a deviation from the predefined gap (D).

7. Apparatus according to one of claims 1 to 6, wherein the packages (21) and/or package groups (23) on the distribution belt (3) and the cycles (20) spaced with a gap (D) on the conveyor belt (5) are arranged in two rows parallel to each other.

## Revendications

1. Dispositif (1) d'assemblage ou de regroupement et d'alignement ou d'orientation de packs (21) et/ou groupes de packs (23), dans lequel sont prévus une bande de distribution (3), une bande transporteuse (5) et une bande de formation de rangées ou de couches (7), **caractérisé en ce que** sont affectés à la bande de distribution (3) un premier moteur (2), à la bande transporteuse (5) un deuxième moteur (4), et à la bande de formation de rangées ou de couches (7) un troisième moteur (6), et **en ce qu'**est prévue une commande (12) qui commande au moins la vitesse (V1) de la bande de distribution (3) afin de former, pour les packs (21) et/ou groupes de packs (23) transportés bout à bout sur la bande de distribution (3), plusieurs cycles ou unités (20) de packs (21) et/ou groupes de packs (23), conformément à une longueur prédéfinie (L), qui sont écartés ou espacés mutuellement par un vide ou intervalle vide (D) prédéfini, sur la bande transporteuse (5) entraînée à vitesse essentiellement constante (V2).

2. Dispositif selon la revendication 1, dans lequel est affecté à la bande de formation de rangées ou de couches (7), un robot (71) qui, pour la formation de couches, décale et/ou tourne les unités (20) ou cycles en provenance de la bande transporteuse (5) dans le sens de transport (P) et/ou transversalement au sens de transport (P), et la bande de formation de rangées ou de couches (7) est conçue de manière à pouvoir créer une couche se composant de plusieurs rangées (14).

3. Dispositif selon la revendication 1, dans lequel est affecté à la bande transporteuse (5), un équipement d'orientation (41), qui amène les unités ou cycles (20) entrants à une orientation prédéterminée, et les unités (20) ainsi orientées peuvent être transférées sous forme de rangée (14) sur la bande de formation de rangées ou de couches (7).

4. Dispositif selon la revendication 1, dans lequel les packs et/ou groupes de packs se trouvent sur la bande de distribution (3) avec l'orientation requise pour la bande transporteuse (5) et la bande de formation de rangées ou de couches (7).

5. Dispositif selon l'une des revendications 1 à 4, dans lequel la commande est une commande programmable (12) permettant de commander le premier moteur (2) de la bande de distribution (3), le deuxième moteur (4) de la bande transporteuse (5) et/ou le troisième moteur (6) de la bande de formation de rangées ou de couches (7) de manière à ce que la pluralité de cycles ou d'unités (20) soient disponibles sur la bande transporteuse (5) conformément à une longueur prédéfinie (L) et à l'intervalle vide (D) entre les unités (20).

6. Dispositif selon l'une des revendications 1 à 5, dans lequel au moins un arrangement de barrière lumineuse ou de barrière photoélectrique (11) est disposé au niveau de la transition de la bande de distribution (3) à la bande transporteuse (5), arrangement qui détermine les intervalles vides (D) entre les cycles ou unités (20) et les longueurs requises (L) des unités (20), et dans le cas d'un écart par rapport à l'intervalle vide (D) prédéfini, la commande (12) pilote la vitesse (V2) de la bande transporteuse (5) en conséquence.

7. Dispositif selon l'une des revendications 1 à 6, dans lequel la disposition des packs (21) et/ou groupes de packs (23) sur la bande de distribution (3) et des cycles ou unités (20) espacés d'un intervalle vide (D) sur la bande transporteuse (5), est faite en deux rangées, parallèlement l'une à l'autre.
